# EUROPÄISCHE PATENTSCHRIFT

(11) **EP 4 007 097 B1**
(45) Veröffentlichungstag und Bekanntmachung des Hinweises auf die Patenterteilung: **28.01.2026**
(21) Anmeldenummer: 21208892.6
(22) Anmeldetag: 18.11.2021
(51) Int. Cl.: H02G 3/18, H02G 3/38, H02G 3/12

(54) **UNTERFLURINSTALLATIONSBAUTEIL**
UNDERFLOOR INSTALLATION COMPONENT
COMPOSANT D'INSTALLATION SOUTERRAINE

(30) Priorität: 25.11.2020 DE 202020106769 U
(43) Veröffentlichungstag der Anmeldung: 01.06.2022
(73) Patentinhaber: OBO Bettermann Hungary Kft., 2347 Bugyi (HU)
(72) Erfinder: Bakonyi, Péter, 1171 Budapest (HU); Doboczi, Zsolt Janos, 1239 Budapest (HU)
(74) Vertreter: Haverkamp Patentanwälte PartG mbB

(56) Entgegenhaltungen:
- EP-A1- 1 895 631
- EP-A2- 1 727 254
- DE-A1- 19 639 521
- US-A1- 2015 060 441

## Beschreibung

Die Erfindung betrifft ein Unterflurinstallationsbauteil mit einem auf einer Bodenplatte abgestützten Rahmenteil und einer an das Rahmenteil angeschlossenen, sich zwischen dem Rahmenteil und der Bodenplatte erstreckenden Seitenwand, wobei die Seitenwand aus zumindest zwei in vertikaler Richtung teleskopartig gegeneinander verstellbaren Seitenwandteilen zusammengesetzt ist, von denen ein Seitenwandteil an das Rahmenteil und ein weiteres Seitenwandteil an die Bodenplatte angeschlossen sind.

Unterflurinstallationsbauteile dienen zum Erstellen von Unterflurinstallationssystemen, insbesondere für elektrische Unterflurinstallationen. Bei den Unterflurinstallationsbauteilen kann es sich um Kanäle, Kanalformteile, etwa zur Richtungsänderung, Unterfluranschlussdosen oder dergleichen handeln. Ein solches Unterflurinstallationssystem ist in den Fußbodenaufbau integriert und daher mitunter auch im Estrich vergossen. Unterflurinstallationsbauteile, die estrichbündig verlegt werden sollen, müssen auf Estrichniveau nivelliert werden, bevor der Estrich zur Erstellung des Bodens gegossen wird. Zu diesem Zweck verfügen zu nivellierende Unterflurinstallationsbauteile über einen Nivellierrahmen als oberseitigen Abschluss, etwa eines Kanals oder einer Unterfluranschlussdose. In einer Unterfluranschlussdose werden an dem Nivellierrahmen Geräteeinbaueinheiten, Mediensäulen, Deckel oder dergleichen angebracht. Zum Nivellieren eines solchen Rahmens sind an diesem mehrere Nivellierschrauben angeordnet, die sich gemäß einer vorbekannten Ausgestaltung an einem Bodenblech des Unterflurinstallationsbauteils abstützen. Das Bodenblech seinerseits ist zweckmäßigerweise mit Schrauben untergrundseitig festgelegt. Um ein Eindringen von Estrich in ein solches Unterflurinstallationsbauteil zu verhindern, sind zwischen dem Nivellierrahmen und Bodenblech Seitenteile als Schalungselemente angeordnet.

Als Seitenteile werden u. a. Seitenschürzen aus einem flexiblen Material eingesetzt. Derartige Seitenschürzen müssen in vielen Fällen zum Verhindern des Eindringens von Estrich in das Innere des Unterflurinstallationsbauteil entsprechend zurechtgelegt werden. Bei dickeren Estrichen kann es jedoch vorkommen, dass durch den von dem fließfähigen Estrich auf eine solche flexible Seitenwand ausgeübte Druck die Schürze in das Innere des Installationsbauteils eingebeult wird, wodurch das Volumen des vorgesehenen Installationshohlraums verringert wird. Zudem kann in einem solchen Fall ein Eindringen von Estrich in das Unterflurinstallationsbauteil nicht immer gänzlich verhindert werden.

Neben derartigen flexiblen Seitenschürzen werden, um die vorstehend aufgezeigten Nachteile zu vermeiden, auch feststehende Seitenteile verwendet. Diese sind an den Rahmen und das Bodenteil angeschlossen. Hierbei handelt es sich um Blechteile. Aufgrund des gegenüber den flexiblen Seitenschürzen starren Materials können diese auch höhere, durch den Estrich seitlich auf diese aufgebrachten Drücken standhalten. Problematisch ist bei derartigen Unterflurinstallationsbauteilen jedoch, dass infolge des Einsatzes derartiger Bauteile in Estriche unterschiedlicher Dicke der durch die Seitenwand zu überbrückende Abstand zwischen dem Rahmenteil und der Bodenplatte im Vorfeld nicht bekannt ist. Eingesetzt werden daher Seitenwände, die die maximale Höhe aufweisen. Die Höhe muss vor Ort an die tatsächlich vorgesehene Estrichhöhe angepasst werden.

Aus der DE 20 2006 014 500 U1 ist ein weiteres Unterflurinstallationsbauteil bekannt, bei dem zwischen dem Rahmenteil und der Bodenplatte zur Ausbildung der Seitenwand ein Schalungsrahmen aus Schaumstoff angeordnet ist. Aufgrund seiner Komprimierbarkeit in Hochrichtung des Bauteils kann dieser, ausgehend von seiner maximalen Höhe, durch Zusammendrücken an geringere Seitenwandhöhen angepasst werden. Um eine hinreichende seitliche Festigkeit aufzuweisen, muss ein solcher aus Schaumstoff gefertigter Schalungsrahmen eine gewisse Breite aufweisen. Diese steht dann für den gewünschten Installationshohlraum nicht mehr zur Verfügung.

Aus EP 1 727 254 A2 ist eine Installationsdose für elektrische Installationen bekannt. Diese Installationsdose ist für einen Unterputzeinbau vorgesehen. Um unterschiedliche Putzdicken ausgleichen zu können, verfügt diese Installationsdose über ein Gehäuseunterteil und ein Gehäuseoberteil. Das Gehäuseoberteil verfügt über vier in den Ecken positionierte Führungsarme. Diese tragen jeweils einen Führungsnocken, der in eine Führungskulisse des Gehäuseunterteils eingreift. Die Führungskulissen des Gehäuseunterteils sind in Richtung zu dem Gehäuseoberteil begrenzt, wodurch die Auszugsbewegung gegenüber dem Gehäuseunterteil begrenzt ist. Infolge der Verstellung des Gehäuseoberteils gegenüber dem Gehäuseunterteil kann diese Installationsdose an unterschiedliche Putzdicken angepasst werden. Bei dieser Installationsdose handelt es sich nicht um eine Unterflurinstallationsdose.

US 2015/0060441 A1 offenbart eine hinsichtlich ihres Installationsvolumens vergrößerbare Installationsdose. Diese Dose umfasst ein Kernsegment und zwei teleskopartig ausziehbare Vergrößerungsmodule. Diese tragen innenseitig jeweils Führungsnocken, die in entsprechenden Führungen des Grundmoduls geführt sind. Auf diese Weise kann die Breite der Installationsdose an das aufzunehmende Volumen elektrischer/elektronischer Komponenten angepasst werden. Bei dieser Installationsdose handelt es sich jedoch nicht um eine Unterflurinstallationsdose.

Ausgehend von dem eingangsskizzierten Stand der Technik liegt der Erfindung die Aufgabe zu Grunde, ein Unterflurinstallationsbauteil der eingangs genannten Art dergestalt weiterzubilden, dass dieses trotz Vorsehens von starren und damit dünnen Seitenwänden, insbesondere solche, die aus einem Blech hergestellt sind, diese nicht nur ohne zusätzliche Maßnahmen hinsichtlich einer Anpassung der Höhe der Seitenwand zum Einbau in einen Estrich unterschiedlicher Dicke geeignet, sondern auch stabiler und zuverlässiger ist.

Gelöst wird diese Aufgabe erfindungsgemäß durch ein eingangs genanntes, gattungsgemäßes Unterflurinstallationsbauteil, bei dem von den Seitenwandteilen ein erstes Seitenwandteil mit zumindest zwei in Querrichtung zur Verstellrichtung voneinander beabstandeten und in dieser Richtung offenen Führungshaken an einem zweiten, in einem Abschnitt mit dem ersten Seitenwandteil überlappend angeordneten Seitenwandteil, mit seinen Führungshaken jeweils in eine Führungskulisse des zweiten Seitenwandteils mit einem ersten Abschnitt durchgreifend, gehalten und geführt ist, während der Hakenabschnitt des jeweiligen Führungshakens das zweite Seitenwandteil aus Sicht des ersten Seitenwandteils hintergreift.

Bei diesem Unterflurinstallationsbauteil ist die Seitenwand aus zumindest zwei teleskopartig gegeneinander verstellbaren Seitenwandteilen zusammengesetzt. Eines der beiden Seitenwandteile ist an das Rahmenteil und das andere an die Bodenplatte angeschlossen. Von Besonderheit ist, dass die beiden Seitenwandteile aneinandergehalten und zueinander in der vertikalen Verstellrichtung geführt sind. Durch diese Maßnahme kann die effektive Höhe der Seitenwand durch die Höhe der beiden Seitenwandteile abzüglich ihres zur gegenseitigen Führung erforderlichen überlappenden Abschnittes ebenso bereitgestellt werden wie eine Seitenwandhöhe, bei der die beiden Seitenwandteile zusammengeschoben sind und die effektive Höhe der Seitenwand des Unterflurinstallationsbauteils dann durch die Höhe des höheren der beiden Seitenwandteile, sollten diese eine unterschiedliche Höhe aufweisen, bestimmt ist. Die teleskopartige Verstellbarkeit der beiden Seitenwandteile mit dem gegenseitigen Anschluss und Führung erfolgt automatisch mit der Höheneinrichtung und ebenso auch mit dem Nivellieren des Rahmenteils gegenüber der Bodenplatte, sodass die Seitenwand letztendlich immer geschlossen bleibt.

Durch die Führung der zumindest beiden Seitenwandteile ist typischerweise auch die Verstellbarkeit des oberen Seitenwandteils gegenüber dem unteren Seitenwandteils begrenzt, was die Mitnahme eines unteren Seitenwandteils durch ein oberes Seitenwandteil begründet, wenn das untere Seitenwandteil nicht das unterste, an die Bodenplatte angeschlossene Seitenwandteil ist. Für die Führung und Anbindung des ersten Seitenwandteils an dem zweiten Seitenwandteil, welches Seitenwandteil beispielsweise das an dem Rahmenteil angeschlossene Seitenwandteil ist, dienen zumindest zwei Führungshaken. Diese sind in Querrichtung zur Verstellrichtung der beiden Seitenwandteile zueinander voneinander beabstandet. Typischerweise befinden sich diese im seitlichen Randabschnitt des ersten Seitenwandteils. Dementsprechend befinden sich auch die Führungskulissen, in die die Führungshaken eingreifen, im seitlichen Randabschnitt des zweiten Seitenwandteils. Die Führungshaken selbst sind in Querrichtung zur Verstellrichtung offen und durchgreifen die Führungskulisse mit einem ersten Abschnitt, während der eigentliche Hakenabschnitt der Führungshaken das zweite Seitenwandteil aus Sicht des ersten Seitenwandteils hintergreift. Auf diese Weise sind die beiden Seitenwandteile aneinandergehalten und aneinander geführt. Bei einer Ausgestaltung, bei der das zweite Seitenwandteil an dem Rahmenteil des Unterflurinstallationsbauteils angeschlossen ist, ist das erste Seitenwandteil an die Bodenplatte angeschlossen oder steht lediglich auf dieser auf. Bei der Höheneinrichtung des Rahmenteils gegenüber der Bodenplatte wird somit das zweite Seitenwandteil gegenüber dem ersten Seitenwandteil verstellt. Durch die teleskopartige Verstellbarkeit wird mit dem Höheneinrichten des Rahmenteils und seiner Nivellierung zugleich die Höhe der Seitenwand durch entsprechendes Verstellen des zweiten Seitenwandteils gegenüber dem ersten Seitenwandteil eingestellt, und zwar ohne dass zusätzliche Maßnahmen vorgenommen werden müssen.

In einer Weiterbildung ist vorgesehen, dass die Seitenwand nicht nur ein erstes Seitenwandteil und ein zweites Seitenwandteil aufweist, sondern zusätzlich ein drittes Seitenwandteil oder auch noch weitere Seitenwandteile. Diese sind in derselben Art und Weise miteinander verbunden, wie dieses vorstehend anhand der Verbindung des ersten und zweiten Seitenwandteils beschrieben ist. Mehr als zwei Seitenwandteile wird man dann einsetzen, wenn durch das Unterflurinstallationsbauteil ein möglichst großer Einbauhöhenbereich abgedeckt werden soll. Dann können die Seitenwandteile mit hinreichend geringer Höhe ausgelegt werden, damit, wenn diese zusammengeschoben sind, die Seitenwand eine minimale Höhe aufweist. Werden die Seitenwandteile auseinander herausgezogen, weist die Seitenwand ihre maximale Höhe auf.

Das erfindungsgemäße Unterflurinstallationsbauteil weist somit trotz starrer Seitenwand, wobei eine solche Seitenwand auch aus mehreren einzelnen Seitenwandteilabschnitten zusammengesetzt sein kann, eine hohe Flexibilität in der einrichtbaren Höhe seiner Seitenwand auf.

Bei dem Unterflurinstallationsbauteil kann es sich beispielsweise um einen Kanal, einen Kanalabzweig oder um eine Unterfluranschlussdose handeln. Bei einem Unterflurinstallationsbauteil mit mehreren winklig zueinander angeordneten Seitenwänden Teilabschnitten, wie beispielsweise bei einer Unterfluranschlussdose weist ein solches Seitenwandteil mehrere einzelne Seitenwandteile auf, die zu einem Ringkörper zusammengefasst sein können. Dabei ist es durchaus möglich, dass die aneinandergehaltenen und aneinandergeführten Seitenwandteile bei einer solchen Ausgestaltung beide als Ringkörper ausgeführt sind. Gemäß einer anderen Ausgestaltung ist vorgesehen, dass beispielsweise das zweite, an dem Rahmenteil gehaltene Seitenwandteil als Ringkörper ausgeführt ist, während die daran angeschlossenen mehreren ersten Seitenwandteile einzelne, voneinander unabhängige Seitenwandteile sind, die über die Kanten nicht miteinander verbunden sind. Eine solche Ausgestaltung ist zweckmäßig, da dann Neigungen zwischen dem Rahmenteil und der Bodenplatte ohne Weiteres ausgeglichen werden können.

Es ist ausreichend, wenn zwei Seitenwandteile mittels zweier Führungshaken aneinander gehalten und aneinander geführt sind. Selbstverständlich ist es möglich, auch mehr als zwei Führungshaken für diese Zwecke einzusetzen. Die Führungshaken sind ausgeführt, damit der gegenüber der Ebene des ersten Seitenwandteils ausgestellte Hakenabschnitt mit den in vertikaler Richtung hiervon beabstandeten Bereichen des ersten Seitenwandteils eine Aufnahme bildet, in die ein die Führungskulisse begrenzender Abschnitt des zweiten Seitenwandteils eingreift. Somit hintergreift der Hakenabschnitt aus Blickrichtung des ersten Seitenwandteils das zweite Seitenwandteil.

Vorzugsweise ist die Öffnung der Führungshaken in entgegengesetzte Richtungen vorgesehen. Dann ist das erste Seitenwandteil unverlierbar an dem zweiten Seitenwandteil gehalten. Montiert wird das erste Seitenwandteil mit aus einer Ebene ausgestellter Lasche, die noch nicht abschließend zu dem Führungshaken geformt ist. Dann können die aus der Ebene ausgestellten Laschen durch die Führungskulisse hindurchgesteckt und anschließend der äußere Abschnitt der ausgestellten Lasche - der zu erstellende Hakenabschnitt - umgebogen werden, um auf diese Weise das zweite Seitenwandteil zu hintergreifen.

Die durch den Führungshaken und durch die zu diesen weisende Oberseite des ersten Seitenwandteils gebildete Aufnahme, in die ein Abschnitt des zweiten Seitenwandteils eingreift, weist eine hinreichende Weite auf, damit die beiden Seitenwandteile verkantungsfrei gegeneinander verstellt werden können. Hierzu ist gemäß einem Ausführungsbeispiel vorgesehen, dass die lichte Weite zumindest dem 1,5-fachen der Materialstärke des zweiten Seitenwandteils entspricht.

Nachstehend ist die Erfindung anhand eines Ausführungsbeispiels unter Bezugnahme auf die beigefügten Figuren beschrieben. Es zeigen:
- **Fig. 1:**: eine perspektivische Ansicht einer Unterfluranschlussdose als beispielhaftes Unterflurinstallationsbauteil mit seiner Seitenwand mit einer Einstellung der Unterfluranschlussdose zum Einbau in einen Estrich minimaler Estrichdicke,
- **Fig. 2:**: die Unterfluranschlussdose der Figur 1 in einer Seitenansicht mit seiner auf maximale Höhe ausgefahrenen Seitenwand,
- **Fig. 3:**: eine Detaildarstellung der Seitenwand der Unterfluranschlussdose in einem Kantenbereich mit aneinander angrenzenden Seitenwandteilabschnitten der Figur 1 in einer ersten Perspektive,
- **Fig. 4:**: eine Detaildarstellung der Seitenwand der Unterfluranschlussdose der Figur 1 in einer weiteren Perspektive und
- **Fig. 5:**: die Seitenwand der Unterfluranschlussdose mit seiner Seitenwand in der ausgefahrenen Stellung gemäß Figur 2 in einer perspektivischen Darstellung.

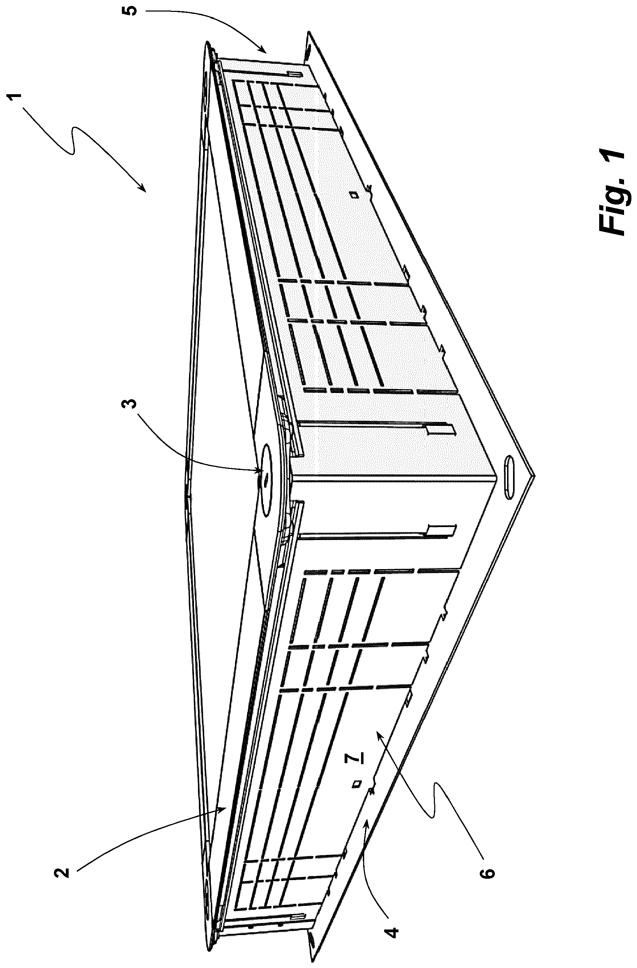

Eine Unterfluranschlussdose 1 verfügt über ein Rahmenteil 2, das über mehrere Nivellierschrauben 3, von denen nur die in der Figur 1 vordere mit diesem Bezugszeichen kenntlich gemacht ist, an einer Bodenplatte 4 abgestützt ist. Das Rahmenteil 2 ist mit einem Deckel in der in Figur 1 gezeigten Stellung verschlossen. Zwischen dem Rahmenteil 2 und der Bodenplatte 4 erstreckt sich umlaufend eine insgesamt mit dem Bezugszeichen 5 gekennzeichnete Seitenwand. Die Seitenwand 5 des dargestellten Ausführungsbeispiels ist aufgrund der quadratischen Umrissgeometrie der Unterfluranschlussdose 1 ebenfalls von ihrer Grundfläche her quadratisch. Die Seitenwand 5 ist in den durch die vier Seiten jeweils gebildeten Seitenwandteilabschnitte gleich ausgebildet. Anhand des Seitenwandteilabschnittes 6 wird nachstehend der Aufbau der Seitenwand 5 bzw. jedes Seitenwandteilabschnittes erläutert.

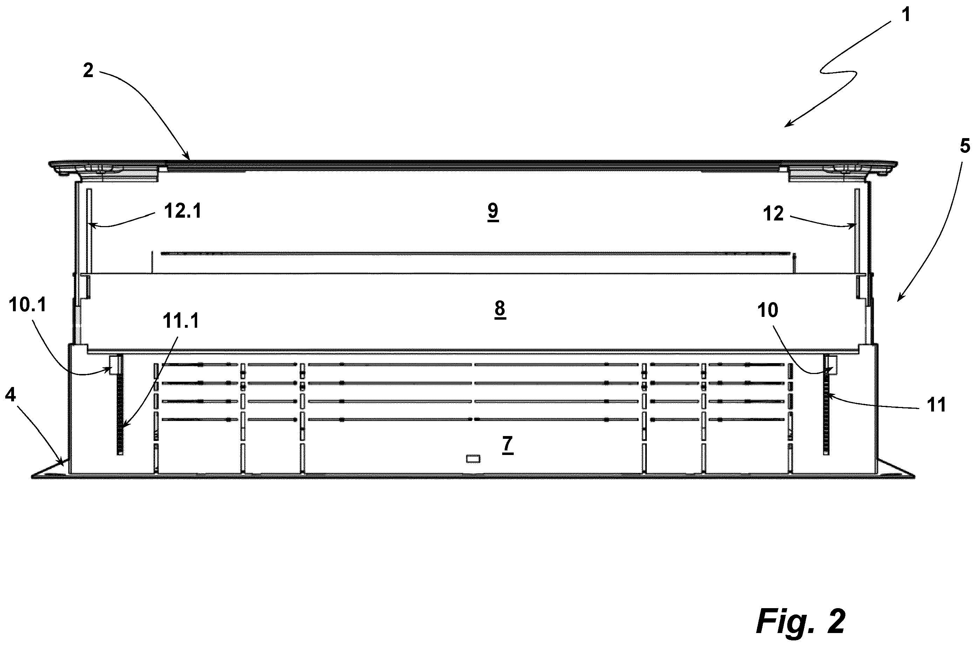

Figur 1 zeigt die Seitenwand 5 und damit den Seitenwandteilabschnitt 6 in einer minimalen Höhe, durch die der Abstand zwischen dem Rahmenteil 2 und der Bodenplatte 4 bestimmt ist. Die Seitenwand 5 bzw. der Seitenwandteilabschnitt 6 selbst ist bei dem dargestellten Ausführungsbeispiel aus drei Seitenwandteilen zusammengesetzt. Diese sind teleskopartig gegeneinander verstellbar. Während Figur 1 die drei Seitenwandteile in ihrer eingeschobenen Stellung zeigt und somit nur das außenliegende Seitenwandteil 7 zu erkennen ist, da die beiden anderen Seitenwandteile innenseitig zu diesem Seitenwandteil 7 angeordnet ist, ist in Figur 2 der Seitenwandteilabschnitt 6 mit den gegeneinander ausgezogenen Seitenwandteilen 7, 8 und 9 gezeigt. Die Höhe des Rahmenteils 2 gegenüber der Bodenplatte 4 ist in der in Figur 2 gezeigten Stellung der Seitenwand 5 gegenüber der Seitenwandhöhe der Figur 1 mehr als verdoppelt. Die Seitenwandteile 7, 8, 9 sind teleskopartig gegeneinander verstellbar. Dabei bildet das Seitenwandteil 9 zusammen mit den ebenfalls oberen, an das Rahmenteil 2 angeschlossenen Seitenwandteilen der benachbarten Seitenwandteilabschnitte einen Ringkörper. Mithin sind die Seitenwandteile 9 miteinander verbunden. Gleiches gilt für die Seitenwandteile 7. Bei den Seitenwandteilen 8 handelt es sich um jeweils einzelne Teile, die bei benachbarten Seitenwandteilabschnitten nicht miteinander verbunden sind. Das Seitenwandteil 8 des Seitenwandteilabschnittes 6 befindet sich zwischen dem außenliegenden Seitenwandteil 7 und dem innenliegenden Seitenwandteil 9. Das Seitenwandteil 8 wird im Rahmen dieser Ausführungen auch als erstes Seitenwandteil angesprochen. Dieses trägt zwei Führungshakenpaare, wobei jeweils zwei Führungshaken vorgesehen sind, das Seitenwandteil 8 an dem Seitenwandteil 7 zu halten und gegenüber diesem in vertikaler Richtung verstellbar zu führen, und wobei zwei weitere Führungshaken demselben Zweck gegenüber dem innenliegenden Seitenwandteil 9 dienen. Die Führungshaken, mit denen das erste Seitenwandteil 8 an das außenliegende Seitenwandteil 7 angeschlossen ist, sind in Figur 2 mit den Bezugszeichen 10, 10.1 kenntlich gemacht. Die Führungshaken 10, 10.1 durchgreifen mit einem Abschnitt jeweils eine Führungskulisse 11, 11.1, die das Seitenwandteil 7 durchgreift und sich in vertikaler Richtung erstreckt. Die Führungshaken 10, 10.1 sind aus der Ebene des Seitenwandteils 8 ausgestellte und in einer Hakenform gebrachte Laschen.

In gleicher Weise trägt das Seitenwandteil 8 in die entgegengesetzte Richtung ausgestellte Führungshaken. Diese sind in Figur 2 nicht erkennbar, da diese das Seitenwandteil 9 mit ihrem Hakenabschnitt hintergreifen. Zur Führung des Seitenwandteils 8 an dem Seitenwandteil 9 verfügt letzteres ebenfalls über zwei Führungskulissen 12, 12.1, die sich in vertikaler Richtung erstrecken.

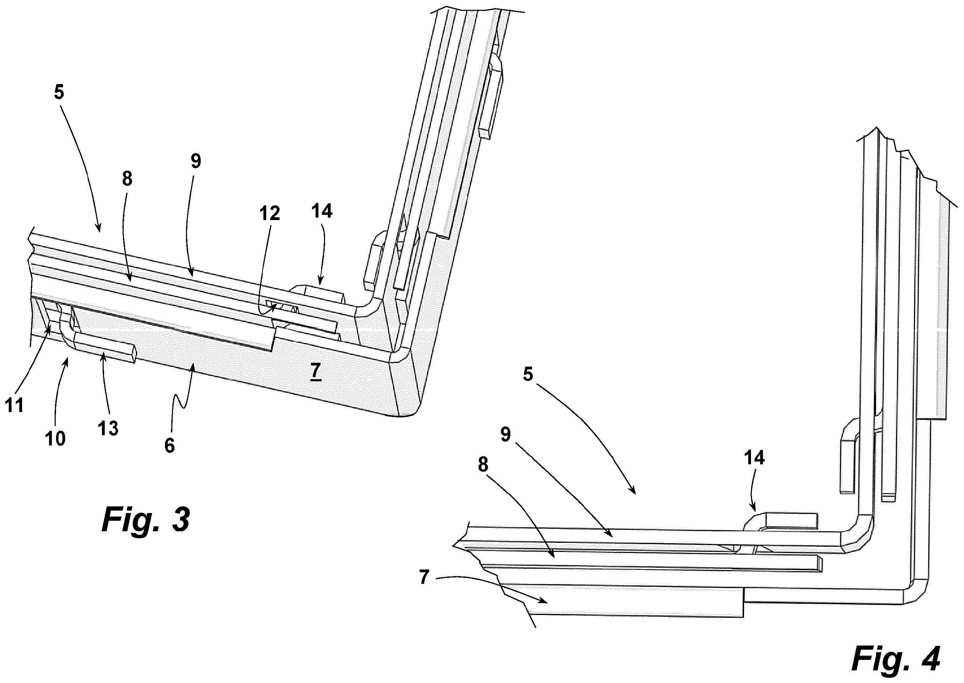

Der Anschluss des Seitenwandteils 8 an das außenliegende Seitenwandteil 7 sowie das innenliegende Seitenwandteil 9 ist aus der Detaildarstellung der Figur 3 erkennbar. In dieser Darstellung ist nicht nur der Durchgriff des Führungshakens 10 durch die Führungskulisse 11 des Seitenwandteils 7 erkennbar, sondern auch der Umstand, dass mit dem Hakenabschnitt 13 aus Sicht des Seitenwandteils 8 das Seitenwandteil 7 hintergriffen ist. Die Führungshaken 10, 10.1 sind, wie Figur 2 erkennen lässt, bezüglich ihrer Öffnungsrichtung voneinander wegweisend. Die Öffnungsrichtung der Führungshaken 10, 10.1 verläuft quer zur vertikalen Verstellbarkeit der Seitenwandteile 7, 8 gegeneinander.

Aufgrund der geänderten Perspektive ist in Figur 3 auch der eine der beiden Führungshaken 14 des Seitenwandteils 8, der die Führungskulisse 12 des innenliegenden Seitenwandteils 9 hintergreift, sichtbar. Gut zu erkennen ist in dieser Darstellung, dass der Führungshaken 14 aus dem Material in der Ebene des Seitenwandteils 8 ausgeklinkt ist. Figur 3 macht auch deutlich, dass die Seitenwandteile 7, 9 des Seitenwandteilabschnittes 6 mit den benachbarten innenliegenden und außenliegenden Seitenwandteilen unter Ausbildung einer Kante verbunden sind, während das Seitenwandteil 8 des Seitenwandteilabschnittes 6 ein eigenständiges Bauteil und nicht mit dem des benachbarten Seitenwandteilabschnittes verbunden ist.

Figur 4 lässt den Eingriff und Hintergriff des Führungshakens 14 des Seitenwandteils 8 in Bezug auf das innenliegende Seitenwandteil 9 deutlich erkennen. Gut zu erkennen ist ferner, dass in den Zwischenraum zwischen den Führungshaken 10, 14 bzw. dem jeweiligen Hakenabschnitt 13 und der jeweiligen Oberfläche des Seitenwandteils 8 eine hinreichende Weite vorgesehen ist, damit der darin eingreifende Abschnitt des Seitenwandteils 9 bzw. 7 verkantungsfrei darin in vertikaler Richtung geführt werden kann. Bei dem gezeigten Ausführungsbeispiel beträgt die lichte Weite dieser Führung etwa der 1,5-fachen Materialstärke des darin eingreifenden Seitenwandteils 9 bzw. 7.

Die vorbeschriebene Auslegung der Seitenwand 5 erlaubt eine stufenlose Höheneinrichtung zwischen den beiden Endstellungen und zwar der minimalen Seitenwandhöhe, wie in Figur 1 gezeigt, und der maximalen Seitenwandhöhe, die in Figur 2 gezeigt ist.

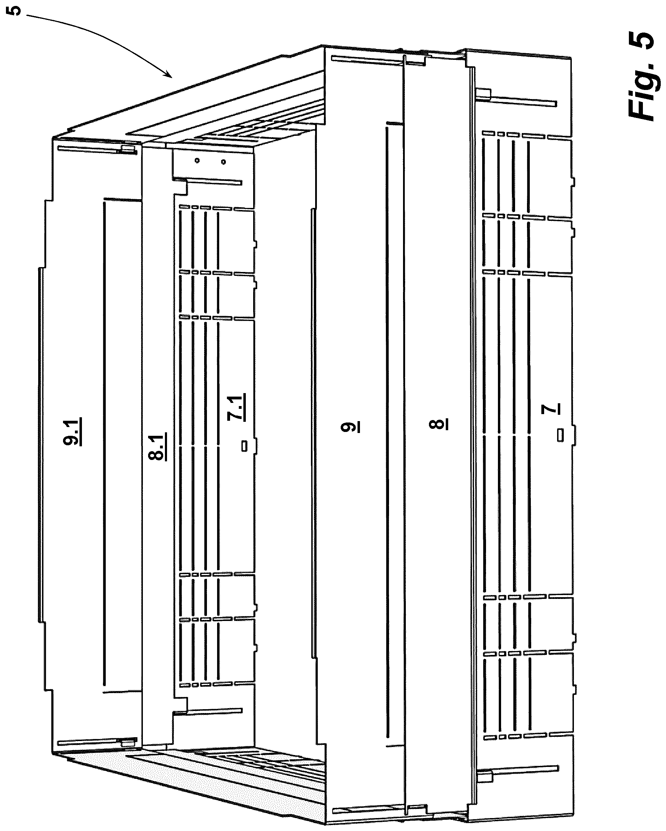

Figur 5 zeigt eine Darstellung der Seitenwand 5 in ihrer maximalen Höhe in einer perspektivischen Ansicht. Darin lässt sich sowohl die Seitenansicht der Figur 2 mit den Seitenwandteilen 7, 8, 9 wiedererkennen als auch die Rückseitenansicht des gegenüberliegenden Seitenwandteilabschnittes mit den Seitenwandteilen 7.1, 8.1, 9.1.

Die maximale Auszugsstellung ist in den Führungskulissen 11, 11.1, 12, 12.1 der Seitenwandteile 7, 9 durch Anschläge begrenzt, und zwar dadurch, dass die Führungskulissen 11, 11.1, 12, 12.1 endseitig geschlossen sind.

Auch wenn in dem vorbeschriebenen Ausführungsbeispiel die Einrichtbarkeit der Höhe des Unterflurinstallationsbauteils anhand einer Unterfluranschlussdose 1 beschrieben ist, lässt sich leicht erkennen, dass sich dieselben Vorteile gleichermaßen bei anderen Unterflurinstallationsbauteilen, wie beispielsweise Kanälen oder dergleichen ergeben.

Die Erfindung ist anhand von Ausführungsbeispielen beschrieben worden. Ohne die den Umfang geltenden Ansprüche zu verlassen, ergeben sich für einen Fachmann zahlreiche weitere Möglichkeiten die Erfindung umzusetzen, ohne dass dies im Rahmen dieser Ausführungen im Einzelnen näher beschrieben werden müsste.

### Bezugszeichenliste

- 1: Unterfluranschlussdose
- 2: Rahmenteil
- 3: Nivellierschraube
- 4: Bodenplatte
- 5: Seitenwand
- 6: Seitenwandteilabschnitt
- 7, 7.1: Seitenwandteil
- 8, 8.1: Seitenwandteil
- 9, 9.1: Seitenwandteil
- 10, 10.1: Führungshaken
- 11, 11.1: Führungskulisse
- 12, 12.1: Führungskulisse
- 13: Hakenabschnitt
- 14: Führungshaken

## Patentansprüche

1. Unterflurinstallationsbauteil mit einem auf einer Bodenplatte (4) abgestützten Rahmenteil (2) und einer an das Rahmenteil (2) angeschlossenen, sich zwischen dem Rahmenteil und der Bodenplatte erstreckenden Seitenwand (5), wobei die Seitenwand (5) aus zumindest zwei in vertikaler Richtung teleskopartig gegeneinander verstellbaren Seitenwandteilen (7, 7.1; 8, 8.1; 9, 9.1) zusammengesetzt ist, von denen ein Seitenwandteil (9, 9.1) an das Rahmenteil (2) und ein weiteres Seitenwandteil (7, 7.1) an die Bodenplatte (4) angeschlossen sind, wobei von den Seitenwandteilen (7, 7.1; 8, 8.1; 9, 9.1) ein erstes Seitenwandteil (8, 8.1) mit zumindest zwei in Querrichtung zur Verstellrichtung voneinander beabstandeten und in dieser Richtung offenen Führungshaken (10, 10.1; 14) an einem zweiten, in einem Abschnitt mit dem ersten Seitenwandteil (8, 8.1) überlappend angeordneten Seitenwandteil (7, 7.1; 9, 9.1), mit seinen Führungshaken (10, 10.1, 14) jeweils in eine Führungskulisse (11, 11.1; 12, 12.1) des zweiten Seitenwandteils (7, 7.1; 9, 9.1) mit einem ersten Abschnitt durchgreifend, gehalten und geführt ist, während ein Hakenabschnitt (13) des jeweiligen Führungshakens (10, 10.1; 14) das zweite Seitenwandteil (7, 7.1; 9, 9.1) aus Sicht des ersten Seitenwandteils (8, 8.1) hintergreift.

2. Unterflurinstallationsbauteil nach Anspruch 1, **dadurch gekennzeichnet, dass** die Führungshaken (10, 10.1; 14) jeweils durch eine aus der Ebene des ersten Seitenwandteils (8, 8.1) in Richtung zu dem zweiten Seitenwandteil (7, 7.1; 9, 9.1) ausgestellte Lasche bereitgestellt sind, sodass zwischen dem ausgestellten Hakenabschnitt (13) des Führungshakens (10, 10.1; 14) und dem zu dem Führungshaken (10, 10.1; 14) in vertikaler Richtung benachbarten Bereichen des ersten Seitenwandteils (8, 8.1) ein die Führungskulisse (11, 11.1; 12, 12.1) des zweiten Seitenwandteils (7, 7.1; 9, 9.1) begrenzender Abschnitt eingreift.

3. Unterflurinstallationsbauteil nach Anspruch 2, **dadurch gekennzeichnet, dass** die Öffnung der beiden Führungshaken (10, 10.1; 14) in entgegengesetzte Richtungen weist.

4. Unterflurinstallationsbauteil nach Anspruch 3, **dadurch gekennzeichnet, dass** die Öffnungsrichtung der beiden Führungshaken voneinander wegweist.

5. Unterflurinstallationsbauteil nach einem der Ansprüche 1 bis 4, **dadurch gekennzeichnet, dass** die Führungskulissen (11, 11.1; 12, 12.1) des zweiten Seitenwandteils (7, 7.1; 9, 9.1) als Führungsschlitze ausgeführt sind.

6. Unterflurinstallationsbauteil nach einem der Ansprüche 2 bis 5, **dadurch gekennzeichnet, dass** die lichte Weite zwischen dem Hakenabschnitt (13) der Führungshaken (10, 10.1; 14) und den in vertikaler Richtung benachbarten Bereichen des ersten Seitenwandteils (8; 8.1) zumindest der 1,5-fachen Materialstärke des darin eingreifenden Abschnitts des zweiten Seitenwandteils (7, 7.1; 9, 9.1) entspricht.

7. Unterflurinstallationsbauteil nach einem der Ansprüche 1 bis 6, **dadurch gekennzeichnet, dass** die Seitenwand (5) mehrere zweite, winklig zueinander angeordnete, einen Ringkörper bildende Seitenwandteile (7, 7.1; 9, 9.1) aufweist und an jedem zweiten Seitenwandteil (7, 7.1; 9, 9.1) ein erstes Seitenwandteil (8, 8.1) gehalten und geführt ist.

8. Unterflurinstallationsbauteil nach Anspruch 7, **dadurch gekennzeichnet, dass** der aus den zweiten Seitenwandteilen (7, 7.1; 9, 9.1) gebildete Ringkörper vier, insbesondere rechtwinklig aneinandergrenzende Seitenwandteilabschnitte (6) aufweist.

9. Unterflurinstallationsbauteil nach einem der Ansprüche 1 bis 8, **dadurch gekennzeichnet, dass** die Seitenwand (5) drei Seitenwandteile (7, 7.1; 8, 8.1; 9, 9.1) umfasst, welche drei Seitenwandteile (7, 7.1; 8, 8.1; 9, 9.1) aneinander gehalten und geführt sind, wie dieses in einem oder mehrere der Ansprüche 1 bis 8 zu dem ersten und zweiten Seitenwandteil beschrieben ist.

10. Unterflurinstallationsbauteil nach Anspruch 9, **dadurch gekennzeichnet, dass** das erste Seitenwandteil (8, 8.1) mit horizontalem und vertikalem Abstand zu den mit dem zweiten Seitenwandteil (7, 7.1; 9, 9.1) in Eingriff stehenden ersten Führungshaken (10, 10.1) zweite, aus der Ebene des ersten Seitenwandteils (8; 8.1) in die entgegengesetzte Richtung ausgestellte Führungshaken (14) trägt, die in jeweils eine Führungskulisse (12, 12.1) des dritten Seitenwandteils (9, 9.1) eingreifen.

11. Unterflurinstallationsbauteil nach Anspruch 10 in seinem Rückbezug auf einem der Ansprüche 7 oder 8, **dadurch gekennzeichnet, dass** die Seitenwand (5) eine der Anzahl der zweiten Seitenwandteile (7, 7.1) entsprechende Zahl an dritten, ebenfalls einen Ringkörper bildende Seitenwandteile (9, 9.1) aufweist.

12. Unterflurinstallationsbauteil nach einem der Ansprüche 1 bis 11, **dadurch gekennzeichnet, dass** das Unterflurinstallationsbauteil eine mit einem Deckel verschließbare Unterfluranschlussdose (1) ist.

## Claims

1. An underfloor installation component comprising a frame part (2) supported on a base plate (4) and a side wall (5) connected to the frame part (2) and extending between the frame part and the base plate, wherein the side wall (5) is composed of at least two side wall parts (7, 7.1; 8, 8.1; 9, 9.1) that are adjustable telescopically relative to each other in the vertical direction, one side wall part (9, 9.1) being connected to the frame part (2) and another side wall part (7, 7.1) being connected to the base plate (4), wherein of the side wall parts (7, 7.1; 8, 8.1; 9, 9.1) a first side wall part (8, 8.1) is held and guided with at least two guide hooks (10, 10.1; 14) spaced apart from each other transversely to the adjustment direction and open in this direction, on a second side wall part (7, 7.1; 9, 9.1) arranged so as to overlap the first side wall part (8, 8.1) in a section, with its guide hooks (10, 10.1, 14) each passing with a first section through a guide track (11, 11.1; 12, 12.1) of the second side wall part (7, 7.1; 9, 9.1), while a hook section (13) of the respective guide hook (10, 10.1; 14) engages behind the second side wall part (7, 7.1; 9, 9.1) when viewed from the first side wall part (8, 8.1).

2. The underfloor installation component according to claim 1, **characterized in that** the guide hooks (10, 10.1; 14) are each provided by a tab projecting from the plane of the first side wall part (8, 8.1) in the direction of the second side wall part (7, 7.1; 9, 9.1), such that a section delimiting the guide track (11, 11.1; 12, 12.1) of the second side wall part (7, 7.1; 9, 9.1) engages between the projecting hook section (13) of the guide hook (10, 10.1; 14) and the regions of the first side wall part (8, 8.1) adjacent to the guide hook (10, 10.1; 14) in a vertical direction.

3. The underfloor installation component according to claim 2, **characterized in that** the opening of the two guide hooks (10, 10.1; 14) points in opposite directions.

4. The underfloor installation component according to claim 3, **characterized in that** the opening direction of the two guide hooks points in opposite directions.

5. The underfloor installation component according to any one of claims 1 to 4, **characterized in that** the guide tracks (11, 11.1; 12, 12.1) of the second side wall part (7, 7.1; 9, 9.1) are designed as guide slots.

6. The underfloor installation component according to any one of claims 2 to 5, **characterized in that** the clear width between the hook section (13) of the guide hooks (10, 10.1; 14) and the vertically adjacent regions of the first side wall part (8; 8.1) corresponds to at least 1.5 times the material thickness of the section of the second side wall part (7, 7.1; 9, 9.1) engaging therein.

7. The underfloor installation component according to any one of claims 1 to 6, **characterized in that** the side wall (5) has multiple second side wall parts (7, 7.1; 9, 9.1) arranged at an angle to each other, forming a ring body, and **in that** a first side wall part (8, 8.1) is held and guided on each second side wall part (7, 7.1; 9, 9.1).

8. The underfloor installation component according to claim 7, **characterized in that** the ring body formed from the second side wall parts (7, 7.1; 9, 9.1) has four side wall part sections (6), in particular adjoining each other at right angles.

9. The underfloor installation component according to any one of claims 1 to 8, **characterized in that** the side wall (5) has three side wall parts (7, 7.1; 8, 8.1; 9, 9.1), which three side wall parts (7, 7.1; 8, 8.1; 9, 9.1) are held and guided adjacent to each other, as described in one or more of claims 1 to 8 in relation to the first and second side wall part.

10. The underfloor installation component according to claim 9, **characterized in that** the first side wall part (8, 8.1) carries, at a horizontal and vertical distance to the first guide hooks (10, 10.1) engaging with the second side wall part (7, 7.1; 9, 9.1), second guide hooks (14) projecting from the plane of the first side wall part (8; 8.1) in the opposite direction, which engage in a respective guide track (12, 12.1) of the third side wall part (9, 9.1).

11. The underfloor installation component according to claim 10 in its back-reference to any one of claims 7 or 8, **characterized in that** the side wall (5) has a number of third side wall parts (9, 9.1) corresponding to the number of second side wall parts (7, 7.1), which also form a ring body.

12. The underfloor installation component according to any one of claims 1 to 11, **characterized in that** the underfloor installation component is an underfloor junction box (1) that can be closed with a cover.

## Revendications

1. Composant d'installation souterraine comprenant un élément formant cadre (2) supporté par une plaque de base (4) et une paroi latérale (5) reliée à l'élément formant cadre (2) et s'étendant entre l'élément formant cadre et la plaque de base, dans lequel la paroi latérale (5) est composée d'au moins deux parties de paroi latérale (7, 7.1; 8, 8.1; 9, 9.1) réglables télescopiquement l'un par rapport à l'autre en direction verticale, parmi lesquelles une partie de paroi latérale (9, 9.1) est fixée à l'élément formant cadre (2) et une autre partie de paroi latérale (7, 7.1) est reliée à la plaque de base (4), dans lequel, parmi les parties de paroi latérale (7, 7.1; 8, 8.1; 9, 9.1), une première partie de paroi latérale (8, 8.1) comportant au moins deux crochets de guidage (10, 10.1; 14) espacés l'un de l'autre transversalement à la direction de réglage et ouverts dans cette direction, est maintenue et guidée sur une deuxième partie de paroi latérale (7, 7.1; 9, 9.1) disposée en chevauchement avec la première partie de paroi latérale (8, 8.1), ses crochets de guidage (10, 10.1; 14) venant chacun en prise dans une rainure de guidage (11, 11.1; 12, 12.1) de la deuxième partie de paroi latérale (7, 7.1; 9, 9.1) avec une première section, pendant qu'une section de crochet (13) du crochet de guidage respectif (10, 10.1; 14) vient en prise derrière la deuxième partie de paroi latérale (7, 7.1; 9, 9.1) du point de vue de la première partie de paroi latérale (8, 8.1).

2. Composant d'installation souterraine selon la revendication 1, **caractérisé en ce que** les crochets de guidage (10, 10.1; 14) sont chacun munis d'une languette faisant saillie du plan de la première partie de paroi latérale (8, 8.1) dans la direction de la deuxième partie de paroi latérale (7, 7.1; 9, 9.1), de sorte qu'une section définissant la rainure de guidage (11, 11.1; 12, 12.1) de la deuxième partie de paroi latérale (7, 7.1; 9, 9.1) vient en prise entre la section de crochet (13) faisant saillie du crochet de guidage (10, 10.1; 14) et les zones de la première partie de paroi latérale (8, 8.1) adjacentes au crochet de guidage (10, 10.1; 14) dans une direction verticale.

3. Composant d'installation souterraine selon la revendication 2, **caractérisé en ce que** l'ouverture des deux crochets de guidage (10, 10.1; 14) pointe dans des directions opposées.

4. Composant d'installation souterraine selon la revendication 3, **caractérisé en ce que** l'orientation d'ouverture des deux crochets de guidage est opposée l'une à l'autre.

5. Composant d'installation souterraine selon l'une des revendications 1 à 4, **caractérisé en ce que** les rainures de guidage (11, 11.1; 12, 12.1) de la deuxième partie de paroi latérale (7, 7.1; 9, 9.1) sont conçus comme des rainures de guidage.

6. Composant d'installation souterraine selon l'une des revendications 2 à 5, **caractérisé en ce que** la largeur libre entre la section de crochet (13) des crochets de guidage (10, 10.1; 14) et les zones verticalement adjacentes de la première partie de paroi latérale (8; 8.1) correspond à au moins 1,5 fois l'épaisseur du matériau de la section de la deuxième partie de paroi latérale (7, 7.1; 9, 9.1) y venant en prise.

7. Composant d'installation souterraine selon l'une des revendications 1 à 6, **caractérisé en ce que** la paroi latérale (5) présente plusieurs deuxièmes parties de paroi latérale (7, 7.1; 9, 9.1) disposées à un angle l'une par rapport à l'autre, formant un corps annulaire, et une première partie de paroi latérale (8, 8.1) est maintenue et guidée sur chaque deuxième partie de paroi latérale (7, 7.1; 9, 9.1).

8. Composant d'installation souterraine selon la revendication 7, **caractérisé en ce que** le corps annulaire formé à partir des deuxièmes parties de paroi latérale (7, 7.1; 9, 9.1) présente quatre sections de partie de paroi latérale (6), en particulier s'accolant les unes aux autres à angle droit.

9. Composant d'installation souterraine selon l'une des revendications 1 à 8, **caractérisé en ce que** la paroi latérale (5) comprend trois parties de paroi latérale (7, 7.1; 8, 8.1; 9, 9.1), lesquelles trois parties de paroi latérale (7, 7.1; 8, 8.1; 9, 9.1) sont maintenues et guidées ensemble comme décrit dans une ou plusieurs des revendications 1 à 8 en ce qui concerne la première et la deuxième partie de paroi latérale.

10. Composant d'installation souterraine selon la revendication 9, **caractérisé en ce que** la première partie de paroi latérale (8, 8.1) porte, à une distance horizontale et verticale des premiers crochets de guidage (10, 10.1) venant en prise avec la deuxième partie de paroi latérale (7, 7.1; 9, 9.1), des seconds crochets de guidage (14) faisant saillie du plan de la première partie de paroi latérale (8; 8.1) dans la direction opposée, qui viennent en prise dans une rainure de guidage (12, 12.1) de la troisième partie de paroi latérale (9, 9.1).

11. Composant d'installation souterraine selon la revendication 10 dans sa référence à l'une des revendications 7 ou 8, **caractérisé en ce que** la paroi latérale (5) présente un nombre de troisièmes parties de paroi latérale (9, 9.1) correspondant au nombre de deuxièmes parties de paroi latérale (7, 7.1), qui forment également un corps annulaire.

12. Composant d'installation souterraine selon l'une des revendications 1 à 11, **caractérisé en ce que** le composant d'installation souterraine est une boîte de jonction souterraine (1) qui peut être fermée avec un couvercle.
